# EUROPEAN PATENT SPECIFICATION

(11) **EP 2 442 128 B1**
(45) Date of publication and mention of the grant of the patent: **11.05.2016**
(21) Application number: 10187603.5
(22) Date of filing: 14.10.2010
(51) Int. Cl.: G01S 5/02, G01S 19/51

(54) **Near-field communication (nfc) system with mobile wireless communications devices determining geographic positions of nfc tags and related methods**
Nahfeldkommunikationssystem mit mobilen drahtlosen Kommunikationsvorrichtungen zur Bestimmung der geographischen Position von Nahfeldkommunikationsetiketten und zugehörige Verfahren
Système de communication de champ proche (nfc) doté de dispositifs de communication sans fil déterminant les positions géographiques et procédés apparentés

(43) Date of publication of application: 18.04.2012
(73) Proprietor: BlackBerry Limited, Waterloo, ON N2K 0A7 (CA)
(72) Inventor: Tysowski, Piotr Konrad, Waterloo Ontario N2K 2R2 (CA)
(74) Representative: Roberts, Gwilym Vaughan

(56) References cited:
- WO-A2-2007/079232
- US-A1- 2007 103 303
- US-A1- 2010 079 249

## Description

### Technical Field

This application relates to the field of communications, and more particularly, to mobile wireless communications devices and related methods that use Near Field Communication (NFC).

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

US 2007/103303 discloses a wireless access point that acquires and processes radio frequency identification (RFID) information. The wireless access point may be coupled to a network of RFID readers over a wireless network. The RFID readers may read a plurality of RFID tags and transmit information to one or more readers. The readers may, in turn, transmit the RFID information to a wireless access point. The wireless access point may include a middleware layer for performing a variety of RFID data processing functions. In one embodiment, the wireless RFID reader network may be used to improve positioning of readers and tags, and may include a GPS system or position assisted GPS system at the reader and/or tag level.

WO 2007/079232 discloses a software application for location determination of a mobile device connected to at least one network. The software application comprises a first input to receive first location information indicative of a first possible location of the mobile device, the first location information obtained from a first source and determined based, at least in part, on signals exchanged over a first wireless connection of the at least one network, a second input to receive second location information indicative of a second possible location of the mobile device, the second location information obtained from a second source and determined based, at least in part, on signals exchanged over a second connection of the at least one network. A location synthesizer is coupled to the first input and the second input, and the location synthesizer is adapted to determine a synthesized location of the mobile device based, at least in part, on the first location information and the second location information.

US 2010/0079249 discloses a communication device and method for acquiring information of radio frequency identification (RFID) tags which include setting a RFID tag search request comprising header information of the predetermined RFID tags, and searching a RFID tag according to the RFID tag search request. The communication device and method further include acquiring position information of a location of the communication device if a found RFID tag is a predetermined RFID tag, and sending the position information and header information of the found RFID tag to a server that collects information of the predetermined RFID tags.

The invention relates to a near-field communication system as further defined in claim 1 and to a communications method as further defined in claim 10.

### Brief Description of the Drawings

FIG. 1 is a schematic block diagram of a near field communication (NFC) system providing NFC tag authentication based upon geographic position in accordance with an example embodiment.
FIG. 2 is a schematic block diagram showing the system of FIG. 1 in greater detail.
FIGS. 3 and 4 are flow diagrams illustrating method aspects associated with the systems of FIGS. 1 and 2.
FIG. 5 is a schematic block diagram of an NFC system in accordance with an alternative embodiment providing NFC tag geographic position determination.
FIG. 6 is a schematic block diagram showing the system of FIG. 5 in greater detail.
FIG. 7 is a schematic block diagram of an alternative embodiment of the system of FIG. 6.

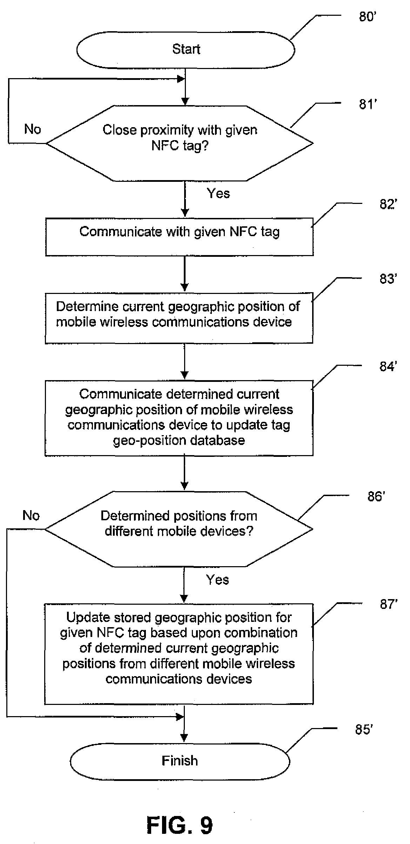

FIGS. 8 and 9 are flow diagrams illustrating method aspects associated with the systems of FIGS. 5-7.
FIG. 10 is a schematic block diagram illustrating example components of a mobile wireless communications device that may be used with the example NFC systems of FIGS. 1-2 and 5-7.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a near-field communication (NFC) system is disclosed herein which may include a plurality of geographically distributed NFC tags, and a tag geo-position database configured to store respective geographic positions of the NFC tags. The NFC system may further include a plurality of mobile wireless communications devices. Each of the mobile wireless communications devices may be configured to communicate with a given NFC tag when in proximity therewith, determine a current geographic position of the mobile wireless communications device, and communicate the determined current geographic position of the mobile wireless communications device to update the geo-position database. As such, the geographic positions of the NFC tags may advantageously be provided by mobile wireless communications devices that interact with the NFC tags after deployment, which may advantageously reduce the time and expense associated with deployment of the NFC tags, as well as facilitating the addition of new NFC tags to the system or redeployment of the NFC tags to different geographical positions as necessary.

More particularly, the tag geo-position database may be configured to update the stored geographic position for the given NFC tag based upon a plurality of determined current geographic positions from different mobile wireless communications devices. Additionally, each mobile wireless communications device may further include a position determining device, such as a global positioning system (GPS) device, for example.

Each mobile wireless communications device may further include a wireless transceiver, such as a cellular transceiver, for example. The wireless transceiver may be configured to communicate with the tag geo-position database. Furthermore, each NFC tag may include a first NFC circuit, and each mobile wireless communications device may include a controller and a second NFC circuit coupled thereto for communicating with the first NFC circuit. Also, the controller may be configured to communicate with the tag geo-position database via the first NFC circuit.

A related communications method may include communicating between a mobile wireless communications device and a given near-field communication (NFC) tag from among a plurality of geographically distributed NFC tags when the mobile wireless communications device is in proximity to the given NFC tag. The method may further include determining a current geographic position of the mobile wireless communications device, and communicating the determined current geographic position of the mobile wireless communications device to update a tag geo-position database configured to store respective geographic positions of the NFC tags.

A related computer-readable medium may have computer-executable instructions for causing a mobile wireless communications device to perform steps comprising communicating with a given near-field communication (NFC) tag from among a plurality of geographically distributed NFC tags when in proximity thereto, determining a current geographic position of the mobile wireless communications device, and communicating the determined current geographic position of the mobile wireless communications device to update a tag geo-position database configured to store respective geographic positions of the NFC tags.

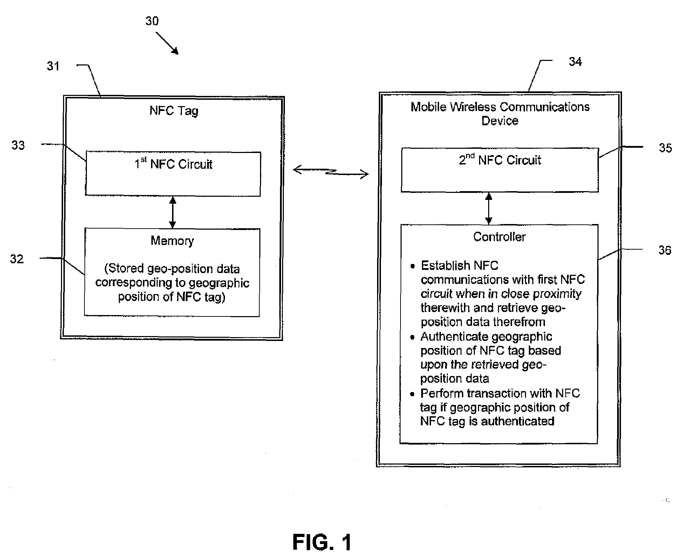

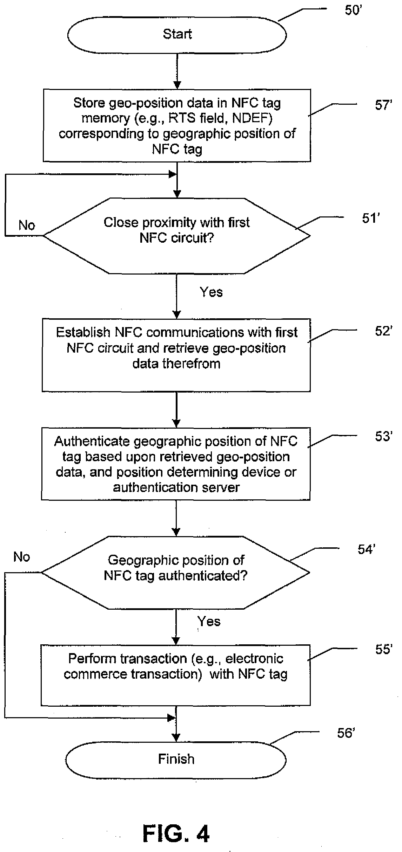

Referring initially to FIGS. 1 through 4, a near-field communication (NFC) system **30** illustratively includes an NFC tag **31** including a memory **32** configured to store geo-position data corresponding to a geographic position of the NFC tag (Blocks **50'** and **57'** of FIG. 4), and a first NFC sensor **33** coupled to the memory **32** and the first NFC sensor **33** being configured to initiate a transaction based upon NFC communications, as will be discussed further below. By way of example, the geo-position data may be stored in an NFC record type definition (RTD) field in an NFC Data Exchange Format (NDEF), although other suitable formats are also possible. The system **30** further illustratively includes a mobile wireless communications device **34** (also referred to as a "mobile device" herein) including a second NFC sensor **35** and a controller **36** coupled thereto.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The controller **36** is configured to cause the second NFC sensor **35** to establish NFC communications with the first NFC sensor **33** when in proximity thereto and retrieve the geo-position data therefrom, at Blocks **51-52.** By way of example, the geo-position data may comprise position coordinates, such as latitude/longitude coordinates or scalar values, for example. Another approach is that the geo-position data may comprise a unique identification (ID) associated with a geographic position.

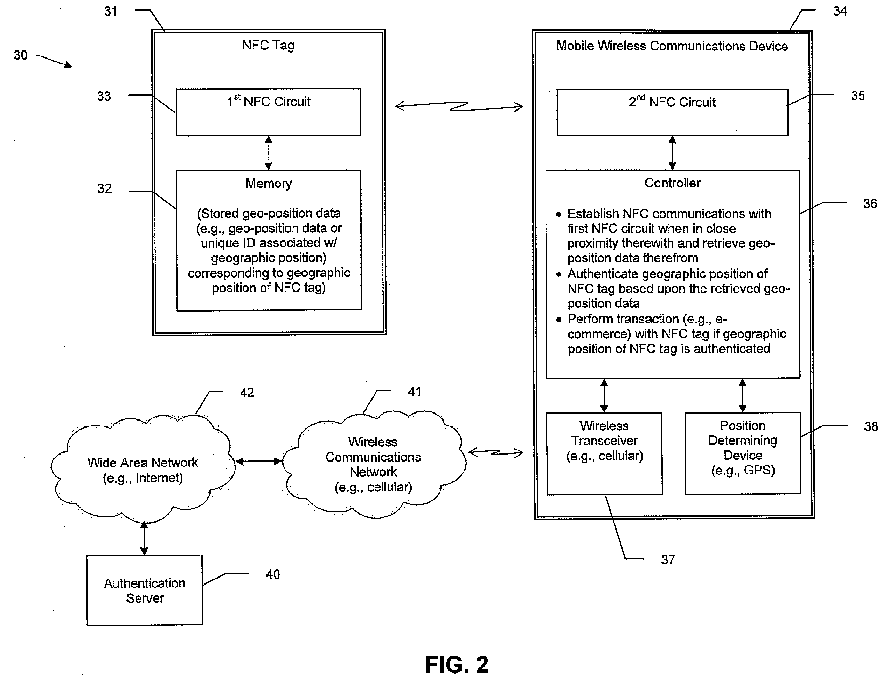

By way of example, as seen in FIG. 2, the mobile device **34** further illustratively includes a wireless transceiver **37** and a position determining device **38** both coupled to the controller **36.** For example, the wireless transceiver **37** may comprise a cellular transceiver, although other suitable wireless communications formats (e.g., wireless LAN, WiMAX, etc.) may also be used. Moreover, the position determining device **38** may comprise a global positioning system (GPS) receiver, for example, although other suitable formats such as Galileo, GLONASS, etc., may also be used.

The unique ID may identify the NFC tag **31** itself (e.g., a serial number), or it may be a translated or encoded version of position coordinates. Thus, the unique ID may be used to inform the mobile device **34** where the mobile device **34** is supposed to be located, or corresponding position coordinates for the unique ID may be stored in an authentication server **40** with which the controller **36** communicates via the wireless transceiver **37,** a wireless communications network **41** (e.g., a cellular network), and a wide area network (WAN) **42,** such as the Internet. For example, the geographic position for the NFC tag **31** may be stored in a database at the authentication server **40** along with the unique ID. Using a unique ID to determine the appropriate position of given NFC tag may be advantageous in some implementation because of the relatively small memories provided on some NFC tags. For example, some NFC tags may have a 2 KB memory capacity or less, so using a relatively small unique ID helps to conserve the memory resources on the NFC tag for other data.

The controller **36** is also configured to authenticate a geographic position of the NFC tag **31** based upon the retrieved geo-position data, at Block **53.** This may be done in a variety of ways. For example, if the geo-position data stored in the memory **32** comprises position coordinates, then when the position coordinates are retrieved by the controller **36,** the controller may then compare the retrieved position coordinates with a current geographic position provided by the position determining device **38** (Block **53'**). If the two sets of position coordinates are within a threshold distance of one another, then the position of the NFC tag **31** is authenticated. In embodiments where the mobile device **34** does not include a position determining device **38,** position coordinates of the mobile device **34** may be provided by the wireless communications network **41** (such as from cellular or WiFi access point triangulation) to the controller **36** to compare with the retrieved geographic position coordinates of the NFC tag **31.**

In other embodiments, the authentication of the geographic position of the NFC tag **31** may be performed by the authentication server **40.** That is, the controller **36** may be further configured to communicate with the authentication server **40** via the wireless transceiver **37** and wireless communications network **41** (and, if appropriate, the wide area network **42**) to authenticate the geographic position of the NFC tag **31.** For example, if the geo-position data stored in the memory **32** is a unique ID corresponding to geographic position coordinates for the NFC tag stored at the authentication server **40,** then the authentication server may compare these coordinates with the current position of the mobile device **34** (which may be obtained from the position determining device **38,** triangulation, etc.) to authenticate the geo-position data, and more particularly, the geographic position of the NFC tag **31.**

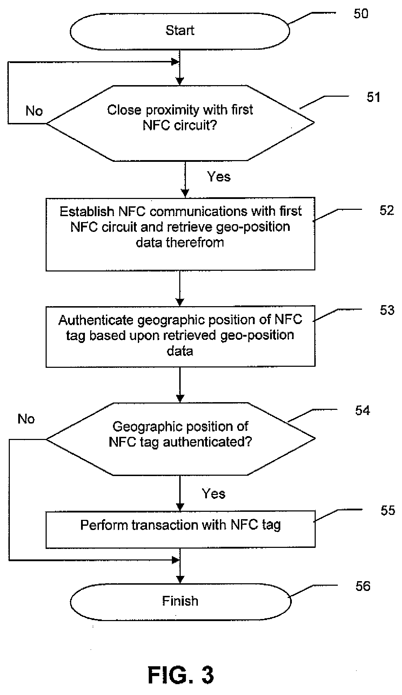

If the geographic position of the NFC tag **31** is authenticated, at Block **54,** then the controller **36** performs the above-noted transaction with the NFC tag **31,** at Block **55,** thus concluding the method illustrated in FIG. 3 (Block **56**)**.** Otherwise, the controller **36** may avoid performing or participating in the transaction with the NFC tag **31,** and may also discontinue NFC communications with the NFC tag. By way of example, the transaction may be an electronic commerce (e-commerce) transaction, such as if the NFC tag **31** is part of a ticket sales terminal, a terminal for paying fees or fares, etc. Other types of transactions may include opening a link in a web browser (the link being provided by the NFC tag **31,** typically to view an advertisement - called a "smart poster"), pairing with a Bluetooth device to begin a Bluetooth session, reading a phone number to initiate a call or SMS, downloading a ringtone from the tag, etc. Also, the NFC tag **31** may provide a clue as to the precise whereabouts of the mobile device **34** to help speed up GPS acquisition. More particularly, when a GPS receiver is missing, or has inaccurate estimates of, its position, velocity, or the current time, the receiver will then systematically search for all possible satellites to obtain this information, which significantly increases a time to first fix (TTFF) of the current location. However, providing initial estimates of one or more of these values may provide a significant reduction in the TTFF.

Authenticating the geographic position of the NFC tag **31** prior to engaging in a transaction therewith helps ensure that the NFC tag **31** is most likely in a geographic position assigned to the NFC tag **31** for security purposes, for example. That is, this authentication advantageously helps ensure that a "dummy" or otherwise unauthenticated tag is not surreptitiously set up to defraud or scam mobile device users, but is instead a valid terminal known to be deployed by a trusted source (e.g., corporation, government, etc.) at the designated location. In some embodiments, both a unique ID and position coordinates may be verified for added security. Also, this technique helps prevent a valid NFC tag from being stolen and re-located from its authorized location by a malicious party (and result in an unauthorized transaction taking place).

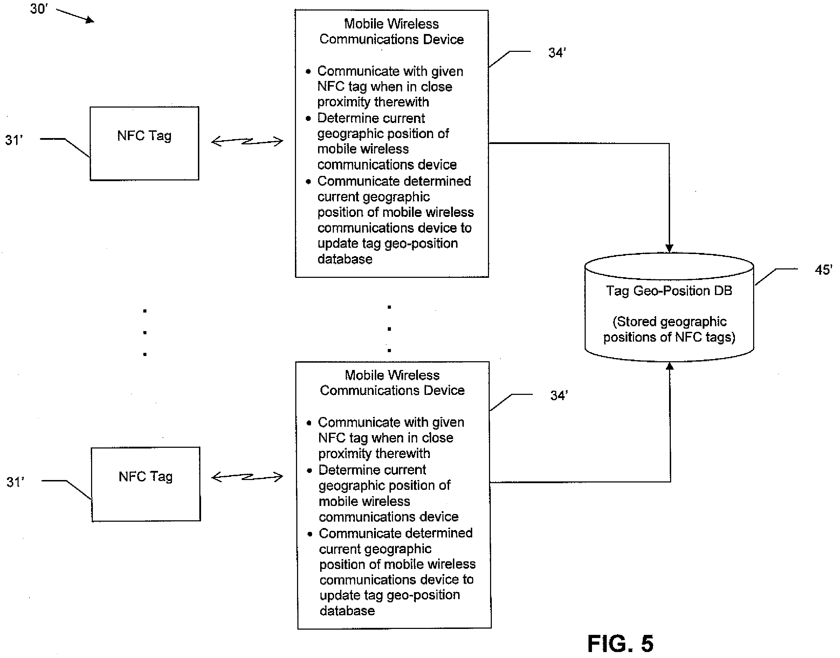

In accordance with an alternative embodiment now described with reference to FIGS. 5 through 8, an NFC system **30'** illustratively includes a plurality of geographically distributed NFC tags **31',** and a tag geo-position database **45'** configured to store respective geographic positions of the NFC tags. As discussed above, the stored geographic positions may be latitude/longitude positions, for example.

The NFC system **30'** further illustratively includes a plurality of mobile devices **34'.** As similarly described above, each mobile device **34'** is configured to communicate with a given NFC tag **31'** when in proximity thereto, at Blocks **80-82,** and determine its respective current geographic position, at Block **83.** That is, upon initiating NFC communications with a respective NFC tag **31',** each mobile device **34'** may determine its current geographic position, for example, based upon a position determining device **38'** thereof (if provided), or from a wireless communications network **41'** (e.g., from triangulation), as discussed above. Considered alternatively, when a mobile device **34'** is in sufficient proximity to communicate with a given NFC tag **31',** their respective geographical positions may effectively be the same. That is, the above-described effective communication range for NFC may be much less than the margin of error of a typical position determining device, so when the two are engaged in NFC communications their respective geographic positions may be considered to be the same. It should be noted that the location of an NFC tag **31'** may only need to be recorded when the NFC tag does not yet already have a location in its memory, or it has a location but it does not match the mobile device's location (through GPS) and there is a discrepancy that needs to be corrected. That is, once the location of a given NFC tag **31'** is generally known, it need not be reported endlessly.

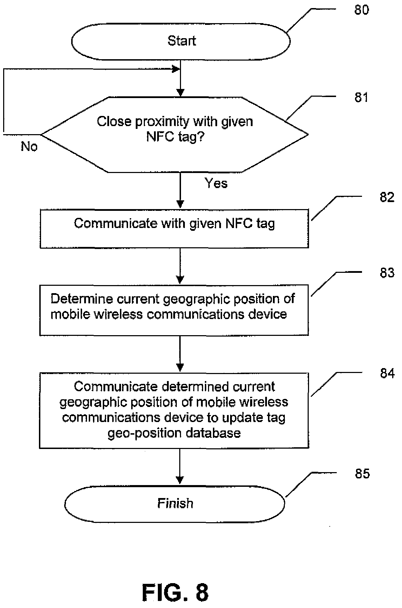

Accordingly, the determined current geographic position of a mobile device **34'** may be used to update the geo-position database **45',** i.e., to provide this determined geographic position as the geographic position of the given tag **31',** at Block **84,** thus concluding the method illustrated in FIG. 8 (Block **85**)**.** As such, the geographic positions of the NFC tags **31'** may advantageously be provided by mobile devices **34'** that interact with the NFC tags after deployment, which may advantageously reduce the time and expense associated with deployment of the NFC tags. That is, the NFC tags **31'** merely need to be positioned in the desired location, and through normal interaction with mobile devices **34'** their respective geographic positions will be populated in the tag geo-position database **45'.** This may also advantageously facilitate the addition of new NFC tags **31'** to the system **30',** or redeployment of NFC tags to different geographical positions as necessary.

In some embodiments, the tag geo-position database **45'** may be configured to update the stored geographic position for a given NFC tag **31'** based upon a plurality of determined current geographic positions from different mobile devices **34',** at Blocks **85'-87'.** That is, the tag geo-position database **45'** may continue to refine the geographic position for a given NFC tag **31'** as the tag geo-position database **45'** receives new geographic position coordinates for different mobile devices **34'.** For example, if an initial geographic position estimate for the given NFC tag **31'** is generated through triangulation, the accuracy of this position estimate may be fairly low. However, as one or more mobile devices **34'** with position determining devices **38'** (e.g., GPS) relay geographic position coordinates for the given NFC tag **31',** which are typically much more accurate than those obtained from triangulation, then the geo-position database **45'** may advantageously be updated to reflect the more accurate coordinates. This may be done by averaging the coordinates, or replacing prior stored coordinates with new ones known to have a greater accuracy. In addition, mobile devices using different location technologies may report the respective location technology being used, or an expectation of its accuracy. This may add weight to reports made using more accurate techniques such as GPS, and less weight to less accurate methods like cell tower positioning, in the averaging calculation performed at the tag geo-position database **45',** the stored coordinates may comprise a weighted average of several coordinates.

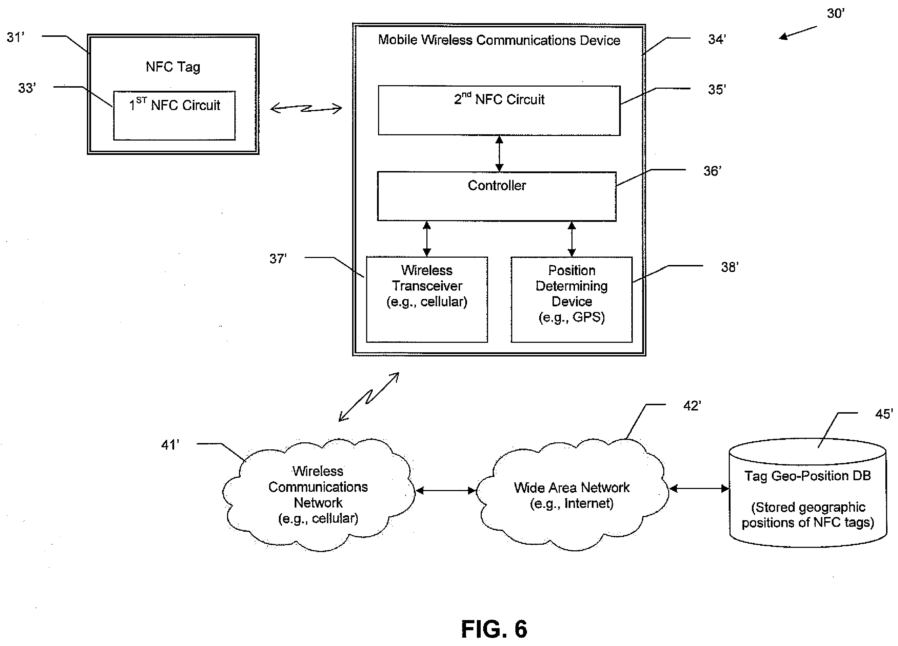

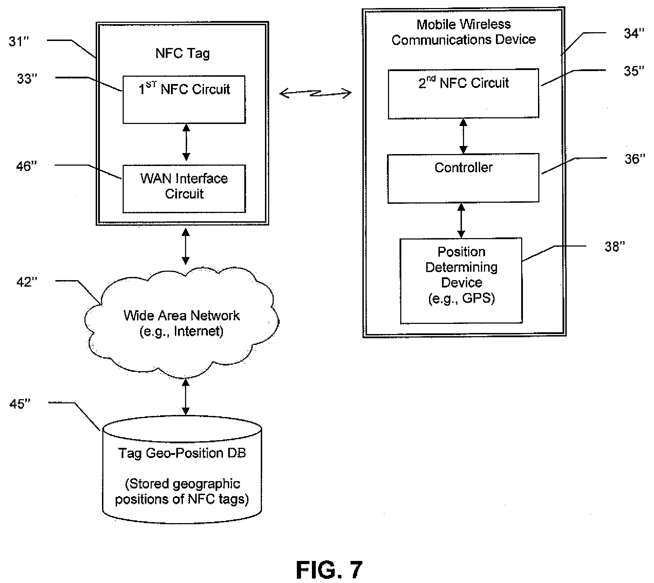

In the example embodiment of FIG. 6, the controller **36'** communicates with the tag geo-position database **45'** via its wireless transceiver **37'.** However, in other embodiments, such as the one shown in FIG. 7, the mobile device **34"**, and the controller **36"** may instead communicate with the tag geo-position database **45"** via the NFC tag **31",** which further includes a WAN interface **46"** for interfacing the WAN **42"**. That is, the mobile device **34"** may communicate with the tag geo-position database **45"** via the NFC tag **31",** or the NFC tag may communicate with the geo-position database directly, with the mobile device assisting by providing a precise location (such as with GPS).

Associating geographic positions with NFC tags, as described above, may advantageously allow other operations to be performed. By way of example, an NFC tag may have available Wi-Fi access point information stored therein along with its respective geographic location. The mobile device may then use a map application to indicate where the access points (or other services) are located. Another operation is using the geographic position of an NFC tag at a landmark to geocode information on the mobile device (e.g., geocode a picture taken in that location by swiping the mobile device with the NFC tag).

Yet another advantageous aspect is that of associating geographic position information with contacts, etc., for reader-to-reader applications. Thus, for example, when contact information is exchanged between mobile devices at a particular location, such as a trade show, etc., the location of the exchange is recorded along with the contact, allowing all contacts obtained from that location to be searched and grouped together accordingly. Another approach is to use the geographic position in an NFC tag to generate calendar appointments. For example, swiping a mobile device to an NFC tag at a doctor's office may assign a calendar entry to the mobile device with location information included for a next appointment.

Still another advantageous aspect of storing geographic position information for an NFC tag is that the NFC tag may be positioned at a location to convey direction information within a building, etc., where satellite position information is not available. For example, an NFC tag with its respective geographic position information stored therein may be positioned at a gate in an airport that faces north. When an arriving passenger exits the gate, swiping the NFC tag with the mobile device allows directions to be provided based upon the direction the mobile device is facing at that particular moment (i.e., north), so that the mobile device may present a prompt requesting a user of the mobile device to go "right" or "left" depending on whether the user's next destination is a connecting flight, ground transportation, etc. Such information is typically more helpful inside of a building than "east" or "west" directions, for example, as the direction of east or west within a building may not be readily apparent.

Still another application is storing multiple geographic positions on an NFC tag. By way of example, for an NFC tag at a customer service or point of sale (POS) station, if a user swipes this NFC tag with a mobile device and the station in unattended or closed, directions to another station (e.g., the next closest station) are provided. Similarly, recording the location at a POS terminal may be used to later search a sales transaction by location, for expense reporting purposes, etc.

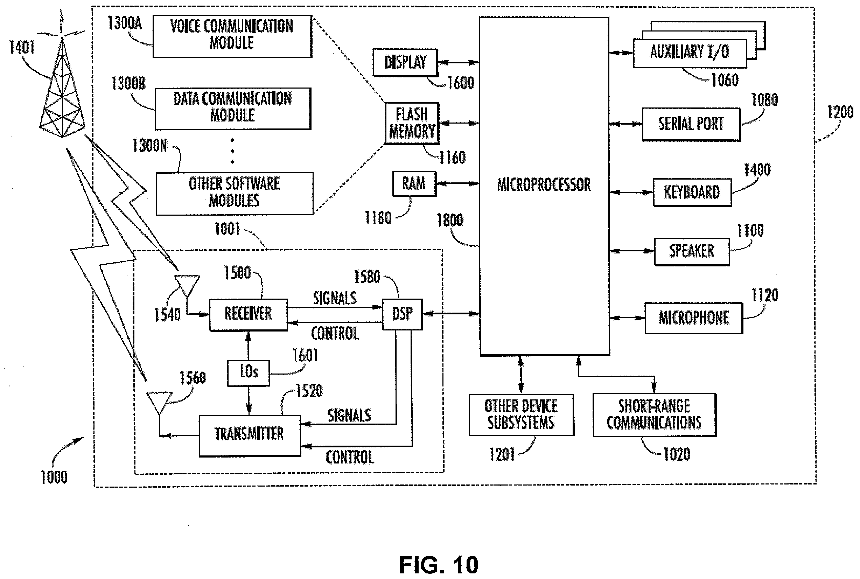

Example components of a mobile wireless communications device **1000** that may be used in accordance with the above-described embodiments are further described below with reference to FIG. 10. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 10. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A near-field communication, NFC, system (30') comprising:
a plurality of geographically distributed NFC tags (31');
a tag geo-position database (45') configured to store respective geographic positions of said NFC tags; and
a plurality of mobile wireless communications devices (34'), each configured to
communicate with a given NFC tag when in proximity thereto,
determine a current geographic position of said mobile wireless communications device,
communicate the determined current geographic position of said mobile wireless communications device to update said tag geo-position database;
comprising
recording the determined current geographic position in said tag geo-position database only when
said given NFC tag does not have a location in its memory; and when
said given NFC tag does have a location but it does not match the determined current geographic position.

2. The NFC system (30') of Claim 1 wherein said tag geo-position database (45') is configured to update the stored geographic position for said given NFC tag (31') based upon a plurality of determined current geographic positions from different mobile wireless communications devices (34').

3. The NFC system (30') of Claim 1 wherein each mobile wireless communications device (34') further comprises a position determining device (38').

4. The NFC system (30') of Claim 3 wherein said position determining device comprises a global positioning system, GPS, device.

5. The NFC system (30') of Claim 1 wherein each mobile wireless communications device (34') further comprises a wireless transceiver (37').

6. The NFC system (30') of Claim 1 wherein each mobile wireless communications device (34') further comprises a cellular transceiver.

7. The NFC system (30') of Claim 1 wherein each mobile wireless communications device (34') further comprises a wireless local area network, WLAN, transceiver.

8. The NFC system (30') of Claim 1 wherein each NFC tag (31') comprises a first NFC sensor (33'); and wherein each mobile wireless communications device (34') comprises a controller (36') and a second NFC sensor (35') coupled thereto for communicating with the first NFC sensor.

9. The NFC system (30') of Claim 8 wherein said controller (36') is configured to communicate with said tag geo-position database (45') via said second NFC sensor (35').

10. A communications method comprising:
communicating between a mobile wireless communications device (34') and a given near-field communication, NFC, tag from among a plurality of geographically distributed NFC tags (31') when the mobile wireless communications device is in proximity to the given NFC tag;
determining a current geographic position of the mobile wireless communications device;
communicating the determined current geographic position of the mobile wireless communications device to update a tag geo-position database (45'), comprising recording the determined current geographic position of the NFC tag in said tag geo-position database only when
said given NFC tag does not have a location in its memory; and when
said given NFC tag does have a location but it does not match the determined current geographic position.

11. The method of Claim 10 further comprising updating the stored geographic position for the given NFC tag (31') based upon a plurality of determined current geographic positions from different mobile wireless communications devices (34').

12. The method of Claim 10 wherein the mobile wireless communications device (34') comprises a position determining device (38'); and wherein determining comprises determining the current geographic position of the mobile wireless communications device based upon its position determining device.

13. The method of Claim 10 wherein the mobile wireless communications device (34') comprises a wireless transceiver (37'); and wherein communicating the determined current geographic position comprises communicating the determined current geographic position to update the tag geo-position database (45') via the wireless transceiver.

## Patentansprüche

1. Ein Nahfeldkommunikations-NFC-System (30'), umfassend:
eine Vielzahl von geographisch verteilten NFC-Etiketten (31');
eine Etikettgeopositionsdatenbasis (45'), die konfiguriert ist, um jeweilige geographische Positionen der NFC-Etiketten zu speichern; und
eine Vielzahl von mobilen drahtlosen Kommunikationsvorrichtung (34'), wobei jede konfiguriert ist, um
mit einem gegebenen NFC-Etikett zu kommunizieren, wenn diese in der Nähe davon ist,
Bestimmen einer aktuellen geographischen Position der mobilen drahtlosen Kommunikationsvorrichtung,
Kommunizieren der bestimmten aktuellen geographischen Position der mobilen drahtlosen Kommunikationsvorrichtung, um die Etikettgeopositionsdatenbasis zu aktualisieren; umfassend
Aufzeichnen der bestimmten aktuellen geographischen Position in der Etikettgeopositionsdatenbasis nur, wenn
das gegebene NFC-Etikett keine Position in dessen Speicher hat; und wenn
das gegebene NFC-Etikett eine Position hat, aber diese nicht mit der bestimmten aktuellen geographischen Position übereinstimmt.

2. Das NFC-System (30') nach Anspruch 1, wobei die Etikettgeopositionsdatenbasis (45') konfiguriert ist, um die gespeicherte geographische Position für das gegebene NFC-Etikett (31') zu aktualisierten, basierend auf einer Vielzahl von bestimmten aktuellen geographischen Position von verschiedenen mobilen drahtlosen Kommunikationsvorrichtungen (34').

3. Das NFC-System (30') nach Anspruch 1, wobei jede mobile drahtlose Kommunikationsvorrichtung (34') ferner eine Positionsbestimmungsvorrichtung (38') umfasst.

4. Das NFC-System (30') nach Anspruch 3, wobei die Positionsbestimmungsvorrichtung eine globale Positionsbestimmungssystem-GPS-Vorrichtung umfasst.

5. Das NFC-System (30') nach Anspruch 1, wobei jede mobile drahtlose Kommunikationsvorrichtung (34') ferner einen drahtlosen Sende-Empfänger (37') umfasst.

6. Das NFC-System (30') nach Anspruch 1, wobei jede mobile drahtlose Kommunikationsvorrichtung (34') ferner einen zellulären Sende-Empfänger umfasst.

7. Das NFC-System (30') nach Anspruch 1, wobei jede mobile drahtlose Kommunikationsvorrichtung (34') ferner einen drahtloses-lokales-Netzwerk-WLAN-Sende-Empfänger umfasst.

8. Das NFC-System (30') nach Anspruch 1, wobei jedes NFC-Etikett (31') einen ersten NFC-Sensor (33') umfasst; und wobei jede mobile drahtlose Kommunikationsvorrichtung (34') eine Steuerung (36') umfasst und einen zweiten NFC-Sensor (35'), der damit gekoppelt ist, zum Kommunizieren mit dem ersten NFC-Sensor.

9. Das NFC-System (30') nach Anspruch 8, wobei die Steuerung (36') konfiguriert ist zum Kommunizieren mit der Etikettgeopositionsdatenbasis (45') mittels des zweiten NFC-Sensors (35').

10. Ein Kommunikationsverfahren, umfassend:
Kommunizieren zwischen einer mobilen drahtlosen Kommunikationsvorrichtung (34') und einem gegebenen Nahfeldkommunikations-NFC-Etikett aus einer Vielzahl von geographisch verteilten NFC-Etiketten (31'), wenn die mobile drahtlose Kommunikationsvorrichtung in der Nähe von dem gegebenen NFC-Etikett ist;
Bestimmen einer aktuellen geographischen Position der mobilen drahtlosen Kommunikationsvorrichtung;
Kommunizieren der bestimmten aktuellen geographischen Position der mobilen drahtlosen Kommunikationsvorrichtung, um eine Etikettgeopositionsdatenbasis (45') zu aktualisierten, umfassend Aufzeichnen der bestimmten aktuellen geographischen Position des NFC-Etiketts in der Etikettgeopositionsdatenbasis nur, wenn
das gegebene NFC-Etikett keine Position in dessen Speicher hat; und wenn
das gegebene NFC-Etikett eine Position hat, aber diese nicht mit der bestimmten aktuellen geographischen Position übereinstimmt.

11. Das Verfahren nach Anspruch 10 ferner umfassend, ein Aktualisieren der gespeicherten geographischen Position für das gegebene NFC-Etikett (31'), basierend auf einer Vielzahl von bestimmten aktuellen geographischen Positionen von verschiedenen mobilen drahtlosen Kommunikationsvorrichtungen (34').

12. Das Verfahren nach Anspruch 10, wobei die mobile drahtlose Kommunikationsvorrichtung (34') eine Positionsbestimmungsvorrichtung (38') umfasst; und wobei das Bestimmen ein Bestimmen der aktuellen geographischen Position der mobilen drahtlosen Kommunikationsvorrichtung, basierend auf dessen Positionsbestimmungsvorrichtung umfasst.

13. Das Verfahren nach Anspruch 10, wobei die mobile drahtlose Kommunikationsvorrichtung (34') einen drahtlosen Sende-Empfänger (37') umfasst; und wobei das Kommunizieren der bestimmten aktuellen geographischen Position ein Kommunizieren der bestimmten aktuellen geographischen Position umfasst, um die Etikettgeopositionsdatenbasis (45') mittels des drahtlosen Sende-Empfängers zu aktualisieren.

## Revendications

1. Système de communication en champ proche, NFC pour « *Near Field Communication* », (30') comprenant :
une pluralité de balises NFC (31') distribuées géographiquement ;
une base de données de géolocalisation des balises (45') configurée pour enregistrer des positions géographiques desdites balises NFC ; et
une pluralité de dispositifs de communication mobile sans fil (34'), chacun étant configuré pour :
communiquer avec une balise NFC donnée lorsqu'il est à sa proximité ;
déterminer une position géographique courante dudit dispositif de communication mobile sans fil ;
communiquer la position géographique courante déterminée pour le dispositif de communication mobile sans fil afin de mettre à jour ladite base de données de géolocalisation ;
comprenant l'étape consistant à :
enregistrer la position géographique courante déterminée dans ladite base de données de géolocalisation uniquement si ladite balise NFC donnée n'a pas de position dans sa mémoire ; et si ladite balise NFC donnée a une position mais si celle-ci ne correspond pas à la position géographique courante déterminée.

2. Système NFC (30') selon la revendication 1, dans lequel la base de données de géolocalisation des balises (45') est configurée pour mettre à jour la position géographique enregistrée pour ladite balise NFC (31') donnée en fonction d'une pluralité de positions géographiques courantes déterminées provenant de différents dispositifs de communication mobile sans fil (34').

3. Système NFC (30') selon la revendication 1, dans lequel chaque dispositif de communication mobile sans fil (34') comprend en outre un dispositif de détermination de position (38').

4. Système NFC (30') selon la revendication 3, dans lequel ledit dispositif de détermination de position consiste en un dispositif du système mondial de localisation, GPS pour *« Global Positioning System ».*

5. Système NFC (30') selon la revendication 1, dans lequel chaque dispositif de communication mobile sans fil (34') comprend en outre un émetteur-récepteur sans fil (37').

6. Système NFC (30') selon la revendication 1, dans lequel chaque dispositif de communication mobile sans fil (34') comprend en outre un émetteur-récepteur cellulaire.

7. Système NFC (30') selon la revendication 1, dans lequel chaque dispositif de communication mobile sans fil (34') comprend en outre un émetteur-récepteur de réseau local sans fil.

8. Système NFC (30') selon la revendication 1, dans lequel chaque balise NFC (31') comprend un premier capteur NFC (33') ; et dans lequel chaque dispositif de communication mobile sans fil (34') comprend un contrôleur (36') et un second capteur NFC (35') qui lui est couplé afin de communiquer avec le premier capteur NFC.

9. Système NFC (30') selon la revendication 8, dans lequel ledit contrôleur (36') est configuré pour communiquer avec ladite base de données de géolocalisation des balises (45') via ledit second capteur NFC (35').

10. Procédé de communication comprenant les étapes consistant à :
communiquer entre un dispositif de communication mobile sans fil (34') et une balise de communication en champ proche, NFC pour « *Near Field Communication* », parmi une pluralité de balises NFC (31') distribuées géographiquement, lorsque le dispositif de communication mobile sans fil est à proximité de la balise NFC donnée ;
déterminer une position géographique courante du dispositif de communication mobile sans fil ;
communiquer la position géographique courante déterminée pour le dispositif de communication mobile sans fil afin de mettre à jour une base de données de géolocalisation de balises (45') ;
comprenant l'étape consistant à :
enregistrer la position géographique courante déterminée dans ladite base de données de géolocalisation uniquement si ladite balise NFC donnée n'a pas de position dans sa mémoire ; et si ladite balise NFC donnée a une position mais si celle-ci ne correspond pas à la position géographique courante déterminée.

11. Procédé selon la revendication 10, comprenant en outre l'étape consistant à mettre à jour la position géographique enregistrée pour ladite balise NFC (31') donnée en fonction d'une pluralité de positions géographiques courantes déterminées provenant de différents dispositifs de communication mobile sans fil (34').

12. Procédé selon la revendication 10, dans lequel le dispositif de communication mobile sans fil (34') comprend un dispositif de détermination de position (38) ; et dans lequel l'étape de détermination comprend l'étape consistant à déterminer la position géographique courante du dispositif de communication mobile sans fil à l'aide de son dispositif de détermination de position.

13. Procédé selon la revendication 10, dans lequel le dispositif de communication mobile sans fil (34') comprend un émetteur-récepteur sans fil (37') ; et dans lequel l'étape de communication de la position géographique courante déterminée comprend l'étape consistant à communiquer la position géographique courante déterminée afin de mettre à jour la base de données de géolocalisation des balises (45'), via l'émetteur-récepteur sans fil.
